# EUROPÄISCHE PATENTSCHRIFT

(11) **EP 1 529 585 B1**
(45) Veröffentlichungstag und Bekanntmachung des Hinweises auf die Patenterteilung: **01.03.2006**
(21) Anmeldenummer: 03025239.9
(22) Anmeldetag: 05.11.2003
(51) Int. Cl.: B23B 31/30

(54) **Dehnspanneinrichtung**
Expanding clamping device
Dispositif de serrage expansible

(43) Veröffentlichungstag der Anmeldung: 11.05.2005
(73) Patentinhaber: Schunk GmbH & Co. KG Spann- und Greiftechnik, 74348 Lauffen (DE)
(72) Erfinder: Schuster, Andreas, 71543 Wüstenrot (DE); Retzbach, Thomas, 74357 Bönnigheim (DE); Sigmund, Rainer, 74348 Lauffen (DE); Michler, Gerhard, 74360 Ilsfeld (DE)
(74) Vertreter: Paul, Dieter-Alfred

(56) Entgegenhaltungen:
- DE-C- 943 872
- DE-C- 19 525 574
- US-A- 3 763 664
- US-A- 5 301 961

## Beschreibung

Die vorliegende Erfindung betrifft eine Dehnspanneinrichtung mit einem Grundkörper, einer an einem axialen Endbereich des Grundkörpers vorgesehenen dünnwandigen Dehnbüchse, die eine zentrale Aufnahme für ein zu spannendes Bauteil bildet, und einem Spannring, welcher die Dehnbüchse unter Bildung einer dazwischen liegenden ringförmigen Druckkammer umgibt und mit dem Grundkörper verschraubt ist, wobei die Druckkammer mit einem Hydraulikmittel gefüllt ist und die Dehnbüchse elastisch verformt werden kann, um ein Bauteil in der Aufnahme zu fixieren, indem der Spannring unter Verkleinerung des Volumens der Druckkammer durch Verdrehung gegenüber dem Grundkörper axial verstellt wird.

Dehnspanneinrichtungen dieser Art sind bekannt und werden in der Praxis eingesetzt, um ein Werkzeug wie beispielsweise ein Fräs- oder Bohrwerkzeug an der Arbeitsspindel einer entsprechenden Werkzeugmaschine zu fixieren. Hierzu wird der Schaft des zu spannenden Werkzeugs in die Aufnahme des Dehnspannfutters eingesetzt und anschließend der Spannring unter Verkleinerung des Volumens der Druckkammer auf die Dehnbüchse aufgeschraubt, so daß dieser durch den wachsenden Druck in der Druckkammer nach innen verformt wird und den Werkzeugschaft in der Aufnahme fixiert.

Bei einer Dehnspanneinrichtung, welche aus der DE 195 25 574 C1 bekannt ist, und gemäß dem Oberbegriff der Ansprüche 1 und 2 wird ein flüssiges Hydraulikmittel wie beispielsweise Öl verwendet. Dies ist jedoch mit dem Nachteil behaftet, daß aufwendige Dichtungsmaßnahmen ergriffen werden müssen, um eine Leckage des flüssigen Hydraulikmittels bei den zum Teil sehr hohen Betriebsdrükken zu vermeiden.

Aufgabe der vorliegenden Erfindung ist es daher, eine Dehnspanneinrichtung der eingangs genannten Art so auszugestalten, daß sie einfach im Aufbau ist und insbesondere keine aufwendigen Dichtungsmaßnahmen benötigt.

Diese Aufgabe ist erfindungsgemäß dadurch gelöst, daß die Druckkammer mit einem elastischen Feststoffkörper als Hydraulikmittel gefüllt ist und ein Gleitringelement zwischen dem elastischen Feststoffkörper und einer Druckfläche des Spannrings angeordnet ist, um eine axiale Druckkraft vom Spannring auf den Feststoffkörper zu übertragen. Der Erfindung liegt somit die Überlegung zugrunde, die Druckkammer nicht wie im Stand der Technik mit einem flüssigen Hydraulikmittel, sondern mit einem elastischen und ebenfalls ringförmigen Feststoffkörper zu füllen, so daß auf aufwendige Dichtungsmaßnahmen verzichtet werden kann. Der in die Druckkammer eingesetzte Gleitring sorgt dabei dafür, daß der ringförmige Feststoffkörper im Bereich seiner der Druckfläche des Spannrings zugewandten Stirnfläche von den Drehbewegungen des Spannrings zumindest weitgehend entkoppelt wird und somit über diese Stirnfläche lediglich Druckkräfte, jedoch keine Reib- oder Torisionskräfte in den Feststoffkörper eingeleitet werden. Es hat sich gezeigt, daß auf diese Weise ein Extrudieren des elastischen Feststoffkörpermaterials vermieden und auch der Verschleiß sehr gering gehalten werden kann. Im übrigen kann der Gleitring, der beispielsweise aus einer geeigneten Metallegierung oder einem Keramikmaterial bestehen kann, auch gleichzeitig eine Dichtungsfunktion besitzen, wenn zwischen dem Außenumfang des Feststoffkörpers und dem Innenumfang des Spannrings ein flüssiges Schmiermittel vorgesehen ist, um die auftretende Reibung bei einem Verdrehen des Spannrings gering zu halten.

Gemäß einer Ausführungsform der Erfindung ist vorgesehen, daß der Feststoffkörper aus mehreren, nebeneinander liegenden in den Druckraum angeordneten Ringelement besteht. Dabei sollte die Druckkammer einen zumindest im wesentlichen konstanten Innen- und Außendurchmesser besitzen.

In weiterer Ausgestaltung de Erfindung kann ein Anschlag vorgesehen sein, der den axialen verstellweg des Spannrings in der Weise begrenzt, daß der maximal erzielbare Druck innerhalb der Druckkammer definiert begrenzt ist.

Des weiteren können an dem Spannring Eingriffsmittel für Betätigungselemente wie beispielsweise einen Rollen- oder Hakenschlüssel vorgesehen sein.

Schließlich kann die erfindungsgemäße Dehnspanneinrichtung für eine Welle/Nabe-Verbindung eingesetzt werden. Ebenfalls kann sie stationär an einer Werkbank oder dergleichen vorgesehen sein.

Im übrigen kann die erfindungsgemäße Dehnspanneinrichtung auch als Spanndorn ausgebildet sein. In diesem Fall besitzt sie einen Grundkörper, eine an einem axialen Endbereich des Grundkörpers vorgesehene dünnwandige Dehnbüchse und einen Spannring, welcher in die Dehnbüchse unter Bildung einer dazwischenliegenden ringförmigen Druckkammer eingreift und mit dem Grundkörper verschraubt ist, wobei die Druckkammer mit einem elastischen Feststoffkörper als Hydraulikmittel gefüllt ist und ein Gleitringelement zwischen dem elastischen Feststoffkörper und einer Druckfläche des Spannrings angeordnet ist, um axiale Druckkräfte vom Spannring auf den Feststoffkörper zu übertragen. Bei dieser Ausgestaltung als Spanndorn wird die Dehnbüchse bei einem Druckaufbau in der Druckkammer nach außen verformt, um ein auf die Dehnbüchse aufgeschobenes Bauteil zu fixieren.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: im Längsschnitt eine erste Ausführungsform einer als Dehnspannfutter ausgebildeten Dehnspanneinrichtung gemäß der vorliegenden Erfindung in ihrem unbetätigten Zustand,

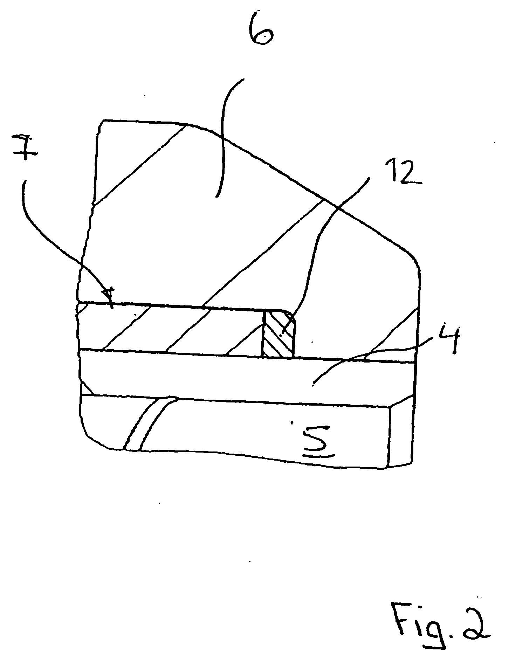

- Figur 2: die Einzelheit X aus Figur 1 in vergrößerter Darstellung, und
- Figur 3: das Dehnspannfutter aus Figur 1 in betätigtem zustand.

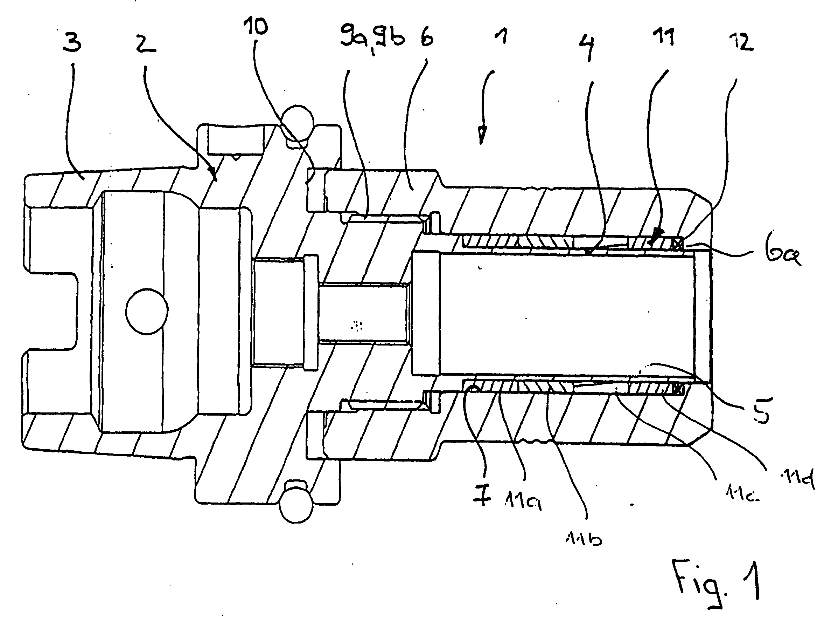

In der Figur 1 ist eine Ausführungsform eines als Steilkegelwerkzeughalter ausgebildeten Dehnspannfutters 1 gemäß der vorliegenden Erfindung im Längsschnitt dargestellt. Das Dehnspannfutter 1 umfaßt einen Grundkörper 2 aus einem formsteifen Material, der an seinem in der Zeichnung linksseitigen Endbereich in an sich bekannter Weise einen Befestigungskonus 3 zur Einspannung an einer drehangetriebenen Arbeitsspindel einer Werkzeugmaschine aufweist. An dem anderen axialen Ende des Grundkörpers 2 ist eine dünnwandige Dehnbüchse 4 vorgesehen, die hier einteilig mit dem Grundkörper 2 ausgebildet ist, alternativ aber auch ein separates Bauteil sein kann, das mit dem Grundkörper 2 fest verbunden ist. Die Dehnbüchse 4 bildet eine zentrale Aufnahme 5, in die ein zylindrischer Schaft eines Werkzeugs wie beispielsweise eines zu spannenden Bohrers oder Fräsers eingeschoben werden kann.

Die Dehnbüchse 4 ist von einem als Überwurfmutter ausgebildeten Spannring 6 umgeben, der an seinem zum Befestigungskonus 3 weisenden axialen Ende auf den Grundkörper 2 aufgeschraubt ist, wozu an dem Grundkörper 2 und an der Innenseite des Spannrings 6 entsprechende Gewindeabschnitte 9a, 9b ausgebildet sind. Die Dehnbüchse 4 und der Spannring 6 bilden zwischen sich eine ringförmige Druckkammer 7 mit einem konstanten innen- und Außendurchmesser, die an ihrem und zum Befestigungskonus 3 weisenden axialen Ende durch einen Absatz 4a der Dehnbüchse 4 und an ihrem anderen axialen Ende durch eine Schulter 6a des Spannrings 6 begrenzt wird. Die Druckkammer 7 ist mit einem elastischen Feststoffkörper 11 gefüllt, welcher in der dargestellten Ausführungsform durch vier nebeneinander liegende Ringelemente 11a, 11b, 11c, 11d gebildet wird. Zusätzlich ist an dem rechten Ende der Druckkammer 7 zwischen der Schulter 6a des Spannrings 6 und der dieser Schulter 6a zugewandten Stirnfläche des außenliegenden Ringelements 11d ein Gleitring 12 vorgesehen, der zum einen den Spannring 6 im Bereich der Schulter 6a dem Feststoffkörper 11 entkoppelt und zum anderen als Dichtungselement für ein Schmiermittel, das in dem Ringspalt zwischen dem Feststoffkörper 11 und dem Spannring 6 vorgesehen ist, fungiert.

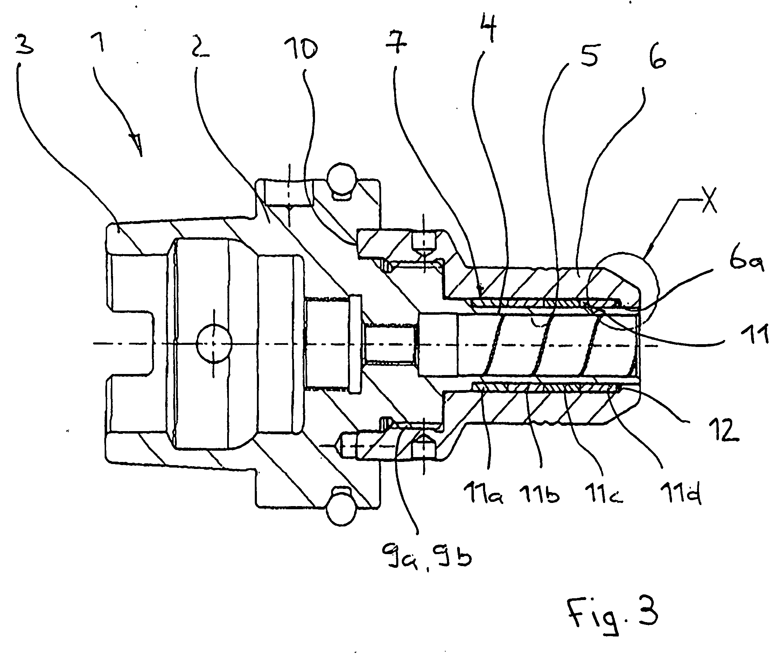

Der Druck innerhalb der Druckkammer 7 läßt sich verändern, indem der Spannring 6 gegenüber dem Grundkörper 2 verdreht und auf diese Weise axial verstellt wird, so daß sich das Volumen der Druckkammer 7 verändert. Konkret ist die Anordnung so getroffen, daß in der in Figur 1 gezeigten rechten Endstellung des Spannrings 6 das Volumen der Druckkammer 7 so groß ist, daß die elastischen Ringelemente 11 in der Druckkammer 7 entspannt sind. Wenn der Spannring 6 aus der in Figur 1 dargestellten Endstellung auf den Grundkörper 2 aufgeschraubt wird, bis er die in Figur 3 dargestellte linke Endstellung 1 erreicht, in welcher der Spannring 6 an einem Axialanschlag 10 des Grundkörpers 2 anliegt, wird die axiale Länge der Druckkammer 7 und damit deren Volumen kontinuierlich verkleinert. Dabei werden die elastischen Ringelemente 11a bis 11d elastisch zusammengedrückt, so daß sich der Druck innerhalb der Druckkammer 7 erhöht und die dünnwandige Dehnbüchse 4 nach innen verformt wird, um ein in die Aufnahme 5 eingesetztes Bauteil zu spannen. Bei der Verstellung des Spannrings 6 aus der in Figur 1 gezeigten Endstellung in die in Figur 3 dargestellte Endstellung werden im wesentlichen reine axiale Druckkräfte in die Ringelemente 11 eingeleitet, da die Ringelemente 11 an ihrem Außenumfang durch das vorgesehene Schmiermittel und an ihrer zur Schulter 6a weisenden Stirnfläche durch den Gleitring 12 von dem Spannring 6 entkoppelt sind, so daß dieser sich gegenüber dem Feststoffkörper 11 im wesentlichen frei bewegen kann.

## Patentansprüche

1. Dehnspanneinrichtung mit einem Grundkörper (2), einer an einem axialen Endbereich des Grundkörpers (2) vorgesehenen dünnwandigen Dehnbüchse (4), die eine zentrale Aufnahme (5) für ein zu spannendes Bauteil bildet, und einem Spannring (6), welcher die Dehnbüchse (4) unter Bildung einer dazwischen liegenden ringförmigen Druckkammer (7) umgibt und mit dem Grundkörper (2) verschraubt ist, wobei die Druckkammer (7) mit einem Hydraulikmittel (11) gefüllt ist und die Dehnbüchse (4) elastisch verformt werden kann, um ein Bauteil in der Aufnahme (5) zu fixieren, indem der Spannring (6) unter Verkleinerung des Volumens der Druckkammer (7) durch Verdrehung gegenüber dem Grundkörper (2) axial verstellt wird, **dadurch gekennzeichnet, daß** die Druckkammer (7) mit einem elastischen Feststoffkörper (11) als Hydraulikmittel gefüllt ist und ein Gleitringelement (12) zwischen dem elastischen Feststoffkörper (11) und einer Druckfläche (6a) des Spannrings (6) angeordnet ist, um eine axiale Druckkraft vom Spannring (6) auf den Feststoffkörper (11) zu übertragen.

2. Dehnspanneinrichtung mit einem Grundkörper (2), einer an einem axialen Endbereich des Grundkörpers (2) vorgesehenen dünnwandigen Dehnbüchse (4) und einem Spannring (6), welcher in die Dehnbüchse (4) unter Bildung einer dazwischen liegenden ringförmigen Druckkammer (7) eingreift und mit dem Grundkörper (2) verschraubt ist, wobei die Druckkammer (7) mit einem Hydraulikmittel (11) gefüllt ist und die Dehnbüchse (4) elastisch verformt werden kann, um ein Bauteil auf der Dehnbüchse (4) zu fixieren, indem der Spannring (6) unter Verkleinerung des Volumens der Druckkammer (7) durch Verdrehung gegenüber dem Grundkörper (2) axial verstellt wird, **dadurch gekennzeichnet, daß** die Druckkammer (7) mit einem elastischen Feststoffkörper (11) als Hydraulikmittel gefüllt ist und ein Gleitringelement (12) zwischen dem elastischen Feststoffkörper (11) und einer Druckfläche (6a) des Spannrings (6) angeordnet ist, um eine axiale Druckkraft vom Spannring (6) auf den Feststoffkörper (11) zu übertragen.

3. Dehnspanneinrichtung nach Anspruch 1 oder 2, **dadurch gekennzeichnet, daß** der Feststoffkörper (11) mehrere, nebeneinander liegend angeordnete Ringelemente (11a, 11b, 11c, 11d) aufweist.

4. Dehnspanneinrichtung nach einem der vorherigen Ansprüche, **dadurch gekennzeichnet, daß** die Druckkammer (7) einen wesentlichen konstanten Innen- und/oder Außendurchmesser besitzt.

## Claims

1. Expanding clamping chuck having a base body (2), a thin-walled expansion sleeve (4) which is provided on an axial end portion of the base body (2) and forms a central receptacle (5) for a work piece that is to be clamped, and a tension ring (5) that surrounds the expansion sleeve (4) forming an annular pressure chamber (7) therebetween and is connected to the base body (2) by screwing, wherein the pressure chamber (7) is filled with a hydraulic medium (11) and the expansion sleeve (4) can be elastically deformed in order to fix a work piece in the receptacle (5) by turning the tension ring (6) relative to the base body (2) in order to axially displace it, thereby reducing the volume of the pressure chamber (7), **characterized in that** the pressure chamber (7) is filled with an elastic solid body (11) as the hydraulic medium and a sliding ring element (12) is provided between the elastic solid body (11) and a pressure face (6a) of the tension ring (6) in order to transfer a pressing force from the tension ring (6) to the solid body (11).

2. Expanding clamping device with a base body (2), a thin-walled expansion sleeve (4) which is provided on an axial end portion of the base body (2) and a tension ring (6), which engages the expansion sleeves (4) forming an annular pressure chamber (7) therebetween and is connected to the base body (2) by screwing, wherein the pressure chamber (7) is filled with a hydraulic medium (11) and the expansion sleeve (4) can be elastically deformed in order to fix a work piece in the receptacle (5) by turning the tension ring (6) relative to the base body (2) in order to axially displace it, thereby reducing the volume of the pressure chamber (7), **characterized in that** the pressure chamber (7) is filled with an elastic solid body (11) as the hydraulic medium and a sliding ring element (12) is provided between the elastic solid body (11) and a pressure face (6a) of the tension ring (6) in order to transfer a pressing force from the tension ring (6) to the solid body (11).

3. Expanding clamping device according to claim 1 or 2, **characterized in that** the solid body (11) comprises several adjacently disposed ring elements (11a, 11b, 11c, 11d).

4. Expanding clamping device according to any preceeding claim, **characterized in that** the pressure chamber (7) has an essentially constant inner and/or outer diameter.

## Revendications

1. Dispositif de serrage expansible avec un corps de base (2), une douille expansible (4) à parois minces pourvue à l'une des zones terminales axiales du corps de base (2), qui forme un logement (5) central pour une pièce qui va être serrée, et un anneau de serrage (6) qui entoure la douille expansible (4) formant entre eux une chambre de pression (7) annulaire, et qui est boulonné dans le corps de base (2), où la chambre de pression (7) est remplie avec un agent hydraulique (11) et la douille expansible (4) peut être déformée de manière élastique pour fixer une pièce dans le logement (5), en ce que l'anneau de serrage (6) est déplacé dans la direction axiale par la rotation de celui à l'égard du corps de base (2), réduisant le volume de la chambre de pression (7), **caractérisé en ce que**, la chambre de pression (7) est remplie avec un corps solide élastique (11) avec rôle d'agent hydraulique, et qu'un élément annulaire de glissement (12) est disposé entre le corps solide élastique (11) et une surface de pression (6a) de l'anneau de serrage (6) pour transmettre sur le corps solide (11) une force de pression axiale exercée par l'anneau de serrage (6).

2. Dispositif de serrage expansible avec un corps de base (2), une douille expansible (4) à parois minces pourvue à l'une des zones terminales axiales du corps de base (2), et un anneau de serrage (6) qui actionne dans l'intérieur de la douille expansible (4) formant entre eux une chambre de pression (7) annulaire, et qui est boulonné dans le corps de base (2), où la chambre de pression (7) est remplie avec un agent hydraulique (11) et la douille expansible (4) peut être déformée de manière élastique pour fixer une pièce sur la douille expansible (4), en ce que l'anneau de serrage (6) est déplacé dans la direction axiale par la rotation de celui à l'égard du corps de base (2), réduisant le volume de la chambre de pression (7), **caractérisé en ce que**, la chambre de pression (7) est remplie avec un corps solide élastique (11) avec rôle d'agent hydraulique, et qu'un élément annulaire de glissement (12) est disposé entre le corps solide élastique (11) et une surface de pression (6a) de l'anneau de serrage (6) pour transmettre sur le corps solide (11) une force de pression axiale exercée par l'anneau de serrage (6).

3. Dispositif de serrage expansible selon la revendication 1 ou 2, **caractérisé en ce que**, le corps solide (11) présente plusieurs éléments annulaires (11a, 11b, 11c, 11d) mis à côté.

4. Dispositif de serrage expansible selon l'une des revendications antérieures, **caractérisé en ce que**, la chambre de pression (7) présente un diamètre intérieur et/ou extérieur en essence constant.
